# EUROPÄISCHE PATENTSCHRIFT

(11) **EP 3 619 091 B1**
(45) Veröffentlichungstag und Bekanntmachung des Hinweises auf die Patenterteilung: **13.09.2023**
(21) Anmeldenummer: 18734485.8
(22) Anmeldetag: 19.06.2018
(51) Int. Cl.: H04W 40/00, B61L 27/40, B61L 15/00

(54) **VERFAHREN UND VORRICHTUNG ZUM ÜBERTRAGEN VON DATEN ZWISCHEN EINEM ERSTEN KOMMUNIKATIONSNETZ EINER ERSTEN SPURGEBUNDENEN FAHRZEUGEINHEIT UND EINEM ZWEITEN KOMMUNIKATIONSNETZ EINER ZWEITEN SPURGEBUNDENEN FAHRZEUGEINHEIT**
METHOD AND APPARATUS FOR TRANSMITTING DATA BETWEEN A FIRST COMMUNICATIONS NETWORK OF A FIRST TRACK-GUIDED VEHICLE UNIT AND A SECOND COMMUNICATIONS NETWORK OF A SECOND TRACK-GUIDED VEHICLE UNIT
PROCÉDÉ ET DISPOSITIF PERMETTANT LA TRANSMISSION DE DONNÉES ENTRE UN PREMIER RÉSEAU DE COMMUNICATION D'UNE PREMIÈRE UNITÉ DE VÉHICULE GUIDÉ ET UN DEUXIÈME RÉSEAU DE COMMUNICATION D'UNE DEUXIÈME UNITÉ DE VÉHICULE GUIDÉ

(30) Priorität: 30.06.2017 DE 102017211153
(43) Veröffentlichungstag der Anmeldung: 11.03.2020
(73) Patentinhaber: Siemens Mobility GmbH, 81739 München (DE)
(72) Erfinder: LOHNEIS, Georg, 96250 Ebensfeld (DE)
(74) Vertreter: Siemens Patent Attorneys
(86) Internationale Anmeldenummer: PCT/EP2018/066168
(87) Internationale Veröffentlichungsnummer: WO 2019/002009

(56) Entgegenhaltungen:
- DE-A1-102010 026 433
- US-A1- 2016 304 106

## Beschreibung

Die Erfindung betrifft Verfahren sowie Vorrichtungen zum Übertragen von Daten zwischen einem ersten Kommunikationsnetz einer ersten spurgebundenen Fahrzeugeinheit und einem zweiten Kommunikationsnetz einer zweiten spurgebundenen Fahrzeugeinheit.

Moderne spurgebundene Fahrzeuge weisen eine Vielzahl unterschiedlicher Systeme zur Steuerung des Fahrzeugs, des Antriebes, der Bremsen, der Türen, der Beleuchtung, der Fahrgastinformation etc. auf. Die einzelnen Geräte bzw. Komponenten eines derartigen Systems kommunizieren hierbei jeweils untereinander, aber auch mit Geräten bzw. Komponenten anderer Systeme, um ein optimales Zusammenspiel aller Systeme bei unterschiedlichen Betriebsbedingungen und Konfigurationen des Fahrzeugs sowie eine umfangreiche Diagnose für eine hohe Verfügbarkeit des Fahrzeugs zu ermöglichen.

Grundsätzlich ist es bekannt, dass spurgebundene Fahrzeuge für die Kommunikation ein Kommunikationsnetz aufweisen. Das Kommunikationsnetz umfasst dabei häufig einen Zugbus zur Kommunikation zwischen mehreren Fahrzeugeinheiten des spurgebundenen Fahrzeugs. Dabei werden Daten zwischen den Fahrzeugeinheiten über eine drahtgebundene Leitung als Teil des Zugbusses am Übergang zwischen den Fahrzeugeinheiten übertragen. Mit anderen Worten: Der Zugbus erstreckt sich über eine Fahrzeugeinheit hinaus.

DE 10 2010 026 433 A1 beschreibt ein Steuernetzwerk für ein Schienenfahrzeug, bei dem Steuergeräte des Schienenfahrzeuges über mindestens zwei Kommunikationspfade ringförmig miteinander verbunden sind.

US 2016 304 106 A1 beschreibt ein Steuersystem zum Betrieb von Lokomotiven in einem Zug. Das Steuersystem umfasst eine erste führende Kommunikationseinheit, die an Bord einer führenden Lokomotive eines führenden Consists des Zuges angeordnet ist. Das Steuersystem umfasst eine zweite führende Kommunikationseinheit, die an Bord einer führenden Lokomotive eines nachlaufenden Consists des Zuges angeordnet ist. Eine Remote-Steuerungsschnittstelle ist außerhalb des Zuges angeordnet. Die erste führende Kommunikationseinheit ist ausgebildet, einen Lokomotivensteuerungsbefehl von der führenden Lokomotive des führenden Consists an die Remote-Steuerungsschnittstelle außerhalb des Zuges zu übertragen.

Die Remote-Steuerungsschnittstelle außerhalb des Zuges ist ausgebildet, den Lokomotivensteuerungsbefehl von der ersten führenden Kommunikationseinheit zu empfangen und diesen an die zweite führenden Kommunikationseinheit weiterzuleiten.

Die zweite führenden Kommunikationseinheit ist ausgebildet, den Lokomotivensteuerungsbefehl von der Remote-Steuerungsschnittstelle zu empfangen.

Vor diesem Hintergrund ist es Aufgabe der Erfindung, die Übertragung von Daten zwischen dem ersten Kommunikationsnetz und dem zweiten Kommunikationsnetz zu verbessern.

Diese Aufgabe wird durch ein Verfahren mit den Merkmalen des Patentanspruchs 1 gelöst bei dem die Daten zwischen der ersten und zweiten Fahrzeugeinheit über eine landseitige Dateneinrichtung übertragen werden.

Die Erfindung basiert auf der Erkenntnis, dass eine drahtgebundene Übertragung von Daten zwischen zwei Fahrzeugeinheiten mit einem hohen Konstruktionsaufwand verbunden ist. Denn zusätzlich zur mechanischen Kopplung der Fahrzeugeinheiten, beispielsweise um die Fahrzeugeinheiten zu einem gemeinsamen spurgebundenen Fahrzeug zusammenzuführen, muss die drahtgebundene Übertragung der Daten durch einen Verkabelung am Übergang zwischen den Fahrzeugeinheiten gewährleistet sein. Die erfindungsgemäße Lösung behebt dieses Problem, indem die Daten über eine landseitige Dateneinrichtung übertragen werden.

Ein Vorteil ergibt sich insbesondere bei spurgebundenen Fahrzeugeinheiten, die jeweils eine datentechnische Verbindung zu einer landseitigen Dateneinrichtung aufweisen: Bei dieser Konfiguration können die bereits vorhandenen Verbindungen genutzt werden, um Daten zwischen dem ersten und zweiten Kommunikationsnetz zu übertragen.

Die erste und/oder zweite Fahrzeugeinheit ist vorzugsweise als Schienenfahrzeugeinheit ausgebildet. Der Begriff "Fahrzeugeinheit" ist vorzugsweise als untrennbare bzw. nicht weiter teilbare Einheit zu verstehen, welche einen oder mehrere Wagen umfasst (häufig als "Consist" bezeichnet).

An das erste bzw. zweite Kommunikationsnetz können unterschiedliche Netzkomponenten datentechnisch angeschlossen werden. Vorzugsweise umfasst das erste bzw. zweite Kommunikationsnetz ein Steuernetz oder besteht aus diesem. Der Fachmann versteht den Begriff "Steuernetz" als ein Netz, welches eine oder mehrere Komponenten zur Fahrzeugsteuerung umfasst. Beispielsweise umfasst das Steuernetz eine Antriebssteuerung, eine Bremssteuerung und/oder eine Komponente zur Verwaltung einer Kommunikation zwischen dem Schienenfahrzeug und der Landseite, etc. Die entsprechenden Komponenten sind steuerungs- und kommunikationstechnisch über das Steuernetz miteinander verbunden.

Die landseitige Dateneinrichtung umfasst vorzugsweise eine Speichereinheit zum Speichern, insbesondere Zwischenspeichern, der zu übertragenden Daten. Die landseitige Dateneinrichtung umfasst weiter vorzugsweise eine Server-Einheit, welche ausgebildet ist, die zu übertragenden Daten zu verwalten und/oder zu bearbeiten. Die Server-Einheit erfüllt weiter vorzugsweise eine sicherheitsrelevante Funktion. Vorzugsweise umfasst die Server-Einheit eine Eingriffserkennungseinheit, welche als "Intrusion Detection System" ausgebildet ist und zum Erkennen von Angriffen, Missbrauchsversuchen und/oder Sicherheitsverletzungen, die das Steuernetz betreffen, dient. Das Überwachen umfasst vorzugsweise ein Protokollieren von Ereignissen, Erstellen und Absenden von Werkstattmeldungen und/oder Erstellen und Absenden von betrieblichen Meldungen. Das Überwachen umfasst weiter vorzugsweise ein Filtern bzw. Verwerfen von Daten, wenn die Daten vorgegebene Eigenschaften und/oder Vorgaben nicht erfüllen.

Erfindungsgemäß werden die Daten zwischen dem ersten und zweiten Kommunikationsnetz über ein übergeordnetes Kommunikationsnetz übertragen.

Der Fachmann versteht die Formulierung "übergeordnet" vorzugsweise dahingehend, dass das erste und zweite Kommunikationsnetz untergeordnete Teilnetze darstellen, innerhalb derer Daten ausgetauscht werden können. Für eine Übertragung von Daten zwischen dem ersten und zweiten Kommunikationsnetz dient das übergeordnete Kommunikationsnetz.

Erfindungsgemäß erstreckt sich das erste Kommunikationsnetz über die erste Fahrzeugeinheit, das zweite Kommunikationsnetz über die zweite Fahrzeugeinheit

Mit anderen Worten: das erste Kommunikationsnetz ist in seiner Ausdehnung auf die erste Fahrzeugeinheit und das zweite Kommunikationsnetz auf die zweite Fahrzeugeinheit beschränkt. Vorzugsweise umfasst das übergeordnete Kommunikationsnetz eine Busstruktur, weiter vorzugsweise einen sogenannten Zugbus.

Gemäß dem erfindungsgemäßen Verfahren werden die Daten zwischen der ersten und zweiten Fahrzeugeinheit mittels des übergeordneten Kommunikationsnetzes über die landseitige Dateneinrichtung übertragen. Mit anderen Worten: Gemäß dieser Weiterbildung umfasst die Übertragung auf dem übergeordneten Kommunikationsnetz die Übertragung über die landseitige Dateneinrichtung (zwischen erster und zweiter Fahrzeugeinheit).

Vorzugsweise nutzt das übergeordnete Kommunikationsnetz eine bereits vorhandene datentechnische Schnittstelle zum Übertragen von Daten zwischen der ersten oder zweiten Fahrzeugeinheit und der landseitigen Dateneinrichtung. Die Schnittstelle umfasst eine Sende-Empfang-Einheit der ersten und zweiten Fahrzeugeinheit, welche jeweils zum Senden von Daten an die landseitige Dateneinrichtung und zum Empfangen von Daten von der landseitigen Dateneinrichtung ausgebildet ist. In einer bevorzugten Variante bildet die Sende-Empfang-Einheit einen Teil des übergeordneten Kommunikationsnetzes.

Die landseitige Dateneinrichtung kann neben dem Empfangen von Daten aus dem ersten Kommunikationsnetz und Weiterleiten der Daten an das zweite Kommunikationsnetz weitere Funktionen umfassen. Beispielsweise stellt die landseitige Dateneinrichtung Fahrgastinformationen zur Übertragung an die erste und/oder zweite Fahrzeugeinheit zur Verfügung. Vorzugsweise wird die Funktion der Dateneinrichtung, wonach diese Daten aus dem ersten Kommunikationsnetz empfangen und die Daten an das zweite Kommunikationsnetz weitergeleitet werden, als Teilfunktion des übergeordneten Kommunikationsnetzes betrachtet. Mit anderen Worten: Die landseitige Dateneinrichtung bildet einen Teil des übergeordneten Kommunikationsnetzes.

Vorzugsweise umfasst das erste Kommunikationsnetz, das zweite Kommunikationsnetz und/oder das übergeordnete Kommunikationsnetz ein Ethernet-Netzwerk oder ist als solches ausgebildet. Weiter vorzugsweise erfolgt eine Kommunikation zwischen Netzkomponenten, die an das Kommunikationsnetz angeschlossen sind, unter Anwendung des TCP/IP (TCP: Transmission Control Protocol; IP: Internet Protocol).

Nach einer weiteren bevorzugten Ausführungsform des erfindungsgemäßen Verfahrens werden die Daten zwischen der ersten oder zweiten Fahrzeugeinheit und der landseitigen Dateneinrichtung drahtlos übertragen. Mit anderen Worten: Zum einen werden die Daten zwischen der ersten Fahrzeugeinheit und der landseitigen Dateneinrichtung drahtlos übertragen. Zum anderen werden die Daten zwischen der landseitigen Dateneinrichtung und der zweiten Fahrzeugeinheit drahtlos übertragen.

Bei einer bevorzugten Weiterbildung dieser Ausführungsform werden die drahtlos übertragenen Daten unter Anwendung eines Mobilfunkstandards übertragen. Beispielsweise werden die Daten unter Anwendung von LTE (Long Term Evolution) übertragen.

Gemäß einer weiteren bevorzugten Ausführungsform des erfindungsgemäßen Verfahrens werden die Daten zwischen der ersten oder zweiten Fahrzeugeinheit und der landseitigen Dateneinrichtung verschlüsselt übertragen. Vorzugsweise erfolgt die Verschlüsselung unter Anwendung von Zertifikaten zur Beglaubigung eines vorgesehenen Zusammenhangs zwischen einem Schlüssel zur Verschlüsselung der Daten und dem Absender der Daten.

Weiter vorzugsweise erfolgt die drahtlose Übertragung der Daten verschlüsselt.

Gemäß dem erfindungsgemäßen Verfahren wird die Übertragung der Daten über die landseitige Dateneinrichtung vorzugsweise von einem Absender der Daten ausgelöst. Beispielsweise sendet eine Absender-Netzkomponente des ersten Kommunikationsnetzes die Daten aus. Diese werden dann auf ihrem Weg über die landseitige Dateneinrichtung zu einer Ziel-Netzkomponente des zweiten Kommunikationsnetzes übertragen.

Bei einer anderen bevorzugten Ausführungsform des erfindungsgemäßen Verfahrens wird eine Anfrage bezüglich Daten ausgehend von dem zweiten Kommunikationsnetz an die landseitige Dateneinrichtung gesendet, die Anfrage ausgehend von der landseitigen Dateneinrichtung an das erste Kommunikationsnetz gesendet und die angefragten Daten von dem ersten Kommunikationsnetz auf die Anfrage hin bereitgestellt.

Vorzugsweise wird die Anfrage von einer an das zweite Kommunikationsnetz datentechnisch angeschlossenen Netzkomponente ausgesendet. Weiter vorzugsweise werden die Daten von einer an das erste Kommunikationsnetz datentechnischen angeschlossenen Netzkomponente bereitgestellt. Weiter vorzugsweise werden die angefragten Daten bereitgestellt, indem diese ausgehend von dem ersten Kommunikationsnetz an die landseitige Dateneinrichtung zur weiteren Übertragung an das zweite Kommunikationsnetz ausgesendet werden.

Bei einer bevorzugten Ausführungsform des erfindungsgemäßen Verfahrens sind die erste und zweite Fahrzeugeinheit Teil einer spurgebundenen Fahrzeugflotte. Dabei können die Fahrzeugeinheiten getrennt (d.h. mechanisch nicht gekoppelt), beispielsweise an entfernt voneinander liegenden Orten, betrieben werden. Diese Ausführungsform ermöglicht eine flexible Kommunikation zwischen Fahrzeugeinheiten einer Fahrzeugflotte.

Bei einer alternativen bevorzugten Ausführungsform des erfindungsgemäßen Verfahrens sind die erste und zweite Fahrzeugeinheit Teil eines gemeinsamen spurgebundenen Fahrzeugs. Dabei sind die Fahrzeugeinheiten vorzugsweise mechanisch miteinander gekoppelt. Das spurgebundene Fahrzeug ist vorzugsweise als Schienenfahrzeug, weiter vorzugsweise als Triebzug ausgebildet. Die Ausführungsform ermöglicht eine besonders flexible Kommunikation zwischen Fahrzeugeinheiten eines spurgebundenen Fahrzeugs.

Bei einer weiteren bevorzugten Ausführungsform des erfindungsgemäßen Verfahrens werden Daten, die für eine Übertragung zwischen einem ersten Steuernetz als erstes Kommunikationsnetz und einem zweiten Steuernetz als zweites Kommunikationsnetz vorgesehen sind, priorisiert zwischen
- der ersten Fahrzeugeinheit und der landseitigen Dateneinrichtung oder
- der zweite Fahrzeugeinheit und der landseitigen Dateneinrichtung
übertragen. Dies hat den Vorteil, dass eine für Steuernetze regelmäßig erforderliche Echtzeitkommunikation zwischen den Steuernetzen erzielt werden kann.

Bei den Daten, die für eine Übertragung zwischen dem ersten Steuernetz und dem zweiten Steuernetz vorgesehen sind, handelt es sich vorzugsweise um Steuerdaten, beispielsweise Sensordaten wie Geschwindigkeitssignale, Beschleunigungssignale, etc. Die Priorisierung der Steuerdaten erfolgt vorzugsweise gegenüber weiteren Daten, die zwischen der ersten oder zweiten Fahrzeugeinheit und der landseitigen Dateneinrichtung übertragen werden. Weitere Daten sind beispielsweise Fahrgastinformationsdaten, Fahrgastunterhaltungsdaten, wie Videodaten eines Unterhaltungsprogramms für Fahrgäste.

Die Erfindung betrifft ferner eine Vorrichtung zum Übertragen von Daten zwischen einem ersten Kommunikationsnetz einer ersten spurgebundenen Fahrzeugeinheit und einem zweiten Kommunikationsnetz einer zweiten spurgebundenen Fahrzeugeinheit mit den Merkmalen des Patentanspruchs 9. Die Vorrichtung ist ausgebildet, die Daten zwischen der ersten und zweiten Fahrzeugeinheit über eine landseitige Dateneinrichtung zu übertragen.

Die Vorrichtung umfasst ein übergeordnetes Kommunikationsnetz, welches ausgebildet ist, die Daten zwischen dem ersten und zweiten Kommunikationsnetz zu übertragen.

Erfindungsgemäß erstreckt sich das erste Kommunikationsnetz über die erste Fahrzeugeinheit, und das zweite Kommunikationsnetz über die zweite Fahrzeugeinheit

Die Erfindung betrifft ferner ein Kommunikationsnetz zum Übertragen von Daten zwischen einem ersten Kommunikationsnetz einer ersten spurgebundenen Fahrzeugeinheit und einem zweiten Kommunikationsnetz einer zweiten spurgebundenen Fahrzeugeinheit mit den Merkmalen des Anspruch 11.

Die Erfindung betrifft ferner eine Verwendung einer datentechnischen Verbindung, welche zur Übertragung von Daten zwischen einer ersten und/oder zweite Fahrzeugeinheit und einer landseitigen Dateneinrichtung ausgebildet ist, mit den Merkmalen des Patentanspruchs 12.

Der Fachmann versteht die Formulierung "zwischen einer ersten und/oder zweiten Fahrzeugeinheit und einer landseitigen Dateneinrichtung" vorzugsweise dahingehend, dass eine Verbindung zwischen der ersten Fahrzeugeinheit und der landseitigen Fahrzeugeinheit sowie eine Verbindung zwischen der zweiten Fahrzeugeinheit und der landseitigen Dateneinrichtung besteht.

Ausführungsbeispiele der Erfindung werden nun anhand der Figuren erläutert. Es zeigen:
- FIG 1: ein erstes Ausführungsbeispiel einer erfindungsgemäßen Vorrichtung bei einem spurgebundenen Fahrzeug,
- FIG 2: ein zweites Ausführungsbeispiel einer erfindungsgemäßen Vorrichtung als Teil einer spurgebundenen Fahrzeugflotte,

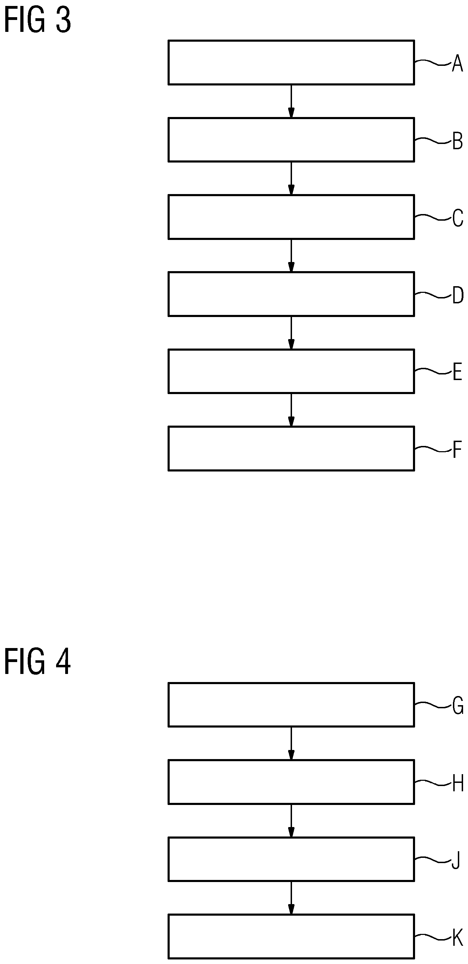

- FIG 3: ein schematisches Ablaufdiagramm eines ersten Ausführungsbeispiels eines erfindungsgemäßen Verfahrens und
- FIG 4: ein schematisches Ablaufdiagramm eines zweiten Ausführungsbeispiels eines erfindungsgemäßen Verfahrens.

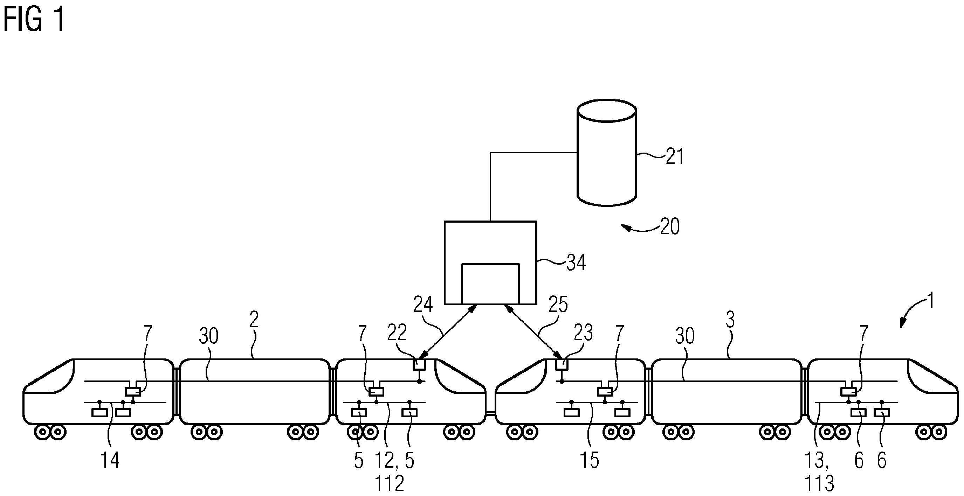

Figur 1 zeigt ein spurgebundenes Fahrzeug 1 in einer schematischen seitlichen Querschnittansicht. In der betrachteten Ausführung ist das spurgebundene Fahrzeug 1 als Schienenfahrzeug, welches mehrere mechanisch gekoppelte Wagen umfasst, ausgebildet. Das spurgebundenen Fahrzeug 1 weist eine erste Fahrzeugeinheit 2 und eine zweite Fahrzeugeinheit 3 auf, die miteinander gekoppelt sind. Mit anderen Worten: Die erste Fahrzeugeinheit 2 und die zweite Fahrzeugeinheit 3 sind Teil des spurgebundenen Fahrzeugs 1.

Die erste Fahrzeugeinheit 2 weist ein erstes Kommunikationsnetz 12 und die zweite Fahrzeugeinheit 3 ein zweites Kommunikationsnetz 13 auf. Das Kommunikationsnetz 12 bzw. 13 bildet jeweils ein Teilnetz der Fahrzeugeinheit 2 bzw. 3, wobei weitere Teilnetze, beispielsweise das Teilnetz 14 der Fahrzeugeinheit 2 und das Teilnetz 15 der Fahrzeugeinheit 3, vorhanden sind. Die Kommunikationsnetze 12 und 13 wenden im Betrieb jeweils das IP-Netzwerkprotokoll an und sind als Ethernet-Netzwerke ausgebildet. An das erste Kommunikationsnetz 12 sind mehrere Netzkomponenten 5 und an das zweite Kommunikationsnetz 13 mehrere Netzkomponenten 6 datentechnisch angeschlossen.

Um eine Kommunikation zwischen dem ersten Kommunikationsnetz 12 und dem zweiten Kommunikationsnetz 13 zu ermöglichen, ist es wünschenswert, Daten zwischen diesen Kommunikationsnetzen zu übertragen. Dazu werden Daten zwischen dem ersten Kommunikationsnetz 12 und dem zweiten Kommunikationsnetz 13 über eine landseitige Dateneinrichtung 20, welche eine Server-Einheit 21 umfasst, übertragen.

Die Fahrzeugeinheit 2 bzw. 3 weist eine Sende-Empfang-Einheit 22 bzw. 23 zum drahtlosen Senden und Empfangen der Daten auf. Die landseitige Dateneinrichtung 20 weist eine Sende-Empfang-Einheit 34 zum Sende und Empfangen der Daten auf. Die Sende-Empfang-Einheiten 22 und 34 bilden einen Teil einer datentechnischen Verbindung 24 zwischen der ersten Fahrzeugeinheit 2 und der landseitigen Dateneinrichtung 20. Die Sende-Empfang-Einheiten 23 und 34 bilden einen Teil einer datentechnischen Verbindung 25 zwischen der ersten Fahrzeugeinheit 2 und der landseitigen Dateneinrichtung 20.

Die Übertragung der Daten von dem ersten Kommunikationsnetz 12 zu dem zweiten Kommunikationsnetz 13 kann durch Aussenden der Daten in einem ersten Verfahrensschritt A durch das erste Kommunikationsnetz 12, insbesondere durch eine der Netzkomponenten 5, ausgelöst werden. Mittels der Sende-Empfang-Einheit 22 werden die Daten an die landseitige Dateneinrichtung 20 ausgesendet (Verfahrensschritt B). In einem Verfahrensschritt C werden die Daten von einer Sende-Empfang-Einheit 34 der landseitigen Dateneinrichtung 20 empfangen. Die Daten werden mittels der Server-Einheit 21 zwischengespeichert (Verfahrensschritt D) und mittels der Sende-Empfang-Einheit 34 an die Sende-Empfang-Einheit 23 der zweiten Fahrzeugeinheit 3 ausgesendet (Verfahrensschritt E). Die Sende-Empfang-Einheit 23 empfängt die Daten in einem Verfahrensschritt F. Die Daten werden daraufhin an das gewünschte Ziel, beispielsweise eine der Netzkomponenten 6 weitergeleitet.

Die drahtlose Übertragung der Daten zwischen der Sende-Empfang-Einheit 22 oder 23 und der Sende-Empfang-Einheit 34 erfolgt unter Anwendung eines Mobilfunkstandards, beispielsweise LTE (Long Term Evolution). Zudem werden die Daten zwischen dem ersten und zweiten Kommunikationsnetz 12 und 13, insbesondere zwischen der Sende-Empfang-Einheit 22 oder 23 und der Sende-Empfang-Einheit 34, verschlüsselt übertragen.

Die Übertragung der Daten zwischen dem ersten und zweiten Kommunikationsnetz kann alternativ auch durch das zweite Kommunikationsnetz 13 ausgelöst werden. Dazu wird über die Sende-Empfang-Einheit 23 eine auf den Empfang der Daten gerichtete Anfrage ausgesendet (Verfahrensschritt G). Die Sende-Empfang-Einheit 34 empfängt die Daten. Die Dateneinrichtung 20 sendet die Anfrage über die Sende-Empfang-Einheit 34 und die Sende-Empfang-Einheit 22 an das erste Kommunikationsnetz 12 (Verfahrensschritt H). Auf das Empfangen der Anfrage hin stellt das erste Kommunikationsnetz 12 die angefragten Daten in einem Verfahrensschritt J bereit, indem die Daten (über die Sende-Empfang-Einheiten 22 und 34) an die Dateneinrichtung 20 gesendet (Verfahrensschritt K) und von dort an das zweite Kommunikationsnetz 13 übertragen werden.

Die Kommunikationsnetze 12 und 13 bilden untergeordnete Teilnetze, die sich über die jeweilige Fahrzeugeinheit 2 und 3, insbesondere über einen jeweiligen Teilbereich der Fahrzeugeinheiten 2 und 3, erstrecken. Die Fahrzeugeinheiten 2 und 3 bilden nicht weiter teilbare Zugeinheiten (häufig auch als "Consist" bezeichnet). Die untergeordneten Teilnetze weisen eine Busstruktur auf, die häufig als Fahrzeugbus bezeichnet wird.

Die untergeordneten Teilnetze 12, 13, 14 und 15 sind jeweils über eine Adressumsetzungseinrichtung in Form eines NAT-Routers 7 (NAT: Network Address Translation) mit einem übergeordneten Kommunikationsnetz 30 gekoppelt. Das übergeordnete Kommunikationsnetz 30 erstreckt sich jeweils zumindest über die Fahrzeugeinheit 2 oder 3 und darüber hinaus. Insbesondere erstreckt sich das übergeordnete Kommunikationsnetz 30 über das spurgebundene Fahrzeug 1 mit seinen Fahrzeugeinheiten 2 und 3. Das übergeordnete Kommunikationsnetz 30 weist eine Busstruktur auf, die fachmännisch häufig als Zugbus bezeichnet wird.

Das übergeordnete Kommunikationsnetz 30 hat beispielsweise die Aufgabe, Daten zwischen dem ersten Kommunikationsnetz 12 und dem zweiten Kommunikationsnetz 13 zu übertragen. Das übergeordnete Kommunikationsnetz 30 nutzt dafür einen Übertragungsweg über die landseitige Dateneinrichtung 20.

Mit anderen Worten: Eine Übertragung von Daten zwischen dem ersten Kommunikationsnetz 12 und dem zweiten Kommunikationsnetz 13 erfolgt über das übergeordnete Kommunikationsnetz 30. Bei bisher bekannten Lösungen (Stand der Technik) werden die Daten zwischen den Fahrzeugeinheiten 2 und 3 drahtgebunden, insbesondere mittels einer drahtgebundenen Verbindung am Übergang zwischen den Fahrzeugeinheiten, übertragen. Im Unterschied dazu sieht die erfindungsgemäße Lösung vor, dass die Daten drahtlos über eine landseitige Dateneinrichtung 20 zwischen den Fahrzeugeinheiten 2 und 3 übertragen werden.

Das Kommunikationsnetz 12 bzw. 13 ist als Steuernetz 112 bzw. 113 ausgebildet. Die Daten, die für eine Übertragung zwischen dem ersten und zweiten Kommunikationsnetz 12 und 13 vorgesehen sind, umfassen Steuerdaten, beispielsweise Sensordaten wie Geschwindigkeitssignale und Beschleunigungssignale. Die Steuerdaten werden über die Verbindung 24 und 25 priorisiert gegenüber anderen Daten übertragen. Andere Daten umfassen beispielsweise Fahrgastinformationsdaten und Daten für ein Fahrgastunterhaltungssystem.

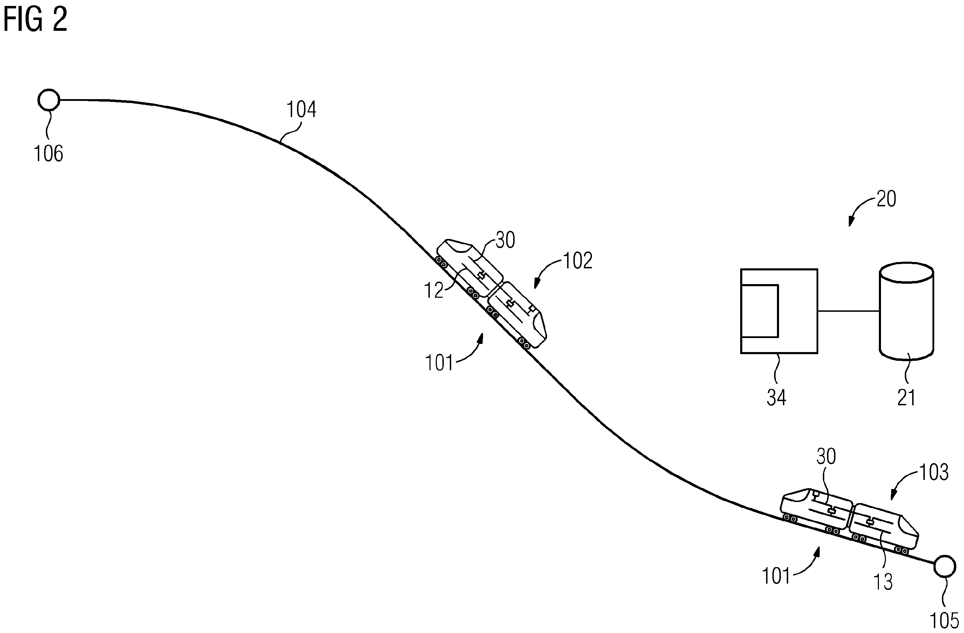

Figur 2 zeigt die in Bezug auf Figur 1 beschriebene erfindungsgemäße Vorrichtung als Teil einer spurgebundenen Fahrzeugflotte 101. Gleiche und funktionsgleiche Komponenten werden dabei mit denselben Bezugszeichen wie in Figur 1 versehen.

Die in Figur 2 gezeigte Fahrzeugflotte 101 umfasst eine erste Fahrzeugeinheit 102 und eine zweite Fahrzeugeinheit 103. Die Fahrzeugeinheiten 102 und 103 bewegen sich auf einer Fahrstrecke 104 zwischen einem Startpunkt 105 und einem Zielpunkt 106. Die Fahrzeugeinheit 102 bzw. 103 umfasst ein erstes Kommunikationsnetz 12 bzw. ein zweites Kommunikationsnetz 13. Für eine Übertragung von Daten zwischen dem ersten und zweiten Kommunikationsnetz 12 und 13 werden diese zwischen der ersten Fahrzeugeinheit 102 und der zweite Fahrzeugeinheit 103 über die landseitige Dateneinrichtung 20 übertragen.

## Patentansprüche

1. Verfahren zum Übertragen von Daten zwischen einem ersten Kommunikationsnetz (12) einer ersten spurgebundenen Fahrzeugeinheit (2) und einem zweiten Kommunikationsnetz einer zweiten spurgebundenen Fahrzeugeinheit (3),
wobei
das erste Kommunikationsnetz (12) ein untergeordnetes Teilnetz (14) der ersten Fahrzeugeinheit (2) bildet und das zweite Kommunikationsnetz (13) ein untergeordnetes Teilnetz (15) der zweiten Fahrzeugeinheit (3) bildet,
die Teilnetze (14, 15) sich über einen jeweiligen Teilbereich der Fahrzeugeinheit (2, 3) erstrecken und jeweils über eine Adressumsetzungseinrichtung in Form eines Network-Address-Translation-Routers mit einem übergeordneten Kommunikationsnetz (30) gekoppelt sind und die Daten zwischen der ersten (2) und zweiten Fahrzeugeinheit (3) über eine landseitige Dateneinrichtung (20) mittels des übergeordneten Kommunikationsnetzes (30) übertragen werden.

2. Verfahren nach Anspruch 1,
wobei
- sich das erste Kommunikationsnetz (12) über die erste Fahrzeugeinheit (2) erstreckt,
- sich das zweite Kommunikationsnetz (13) über die zweite Fahrzeugeinheit (3) erstreckt und/oder
- das übergeordnete Kommunikationsnetz (30) sich über ein die erste (2) und zweite Fahrzeugeinheit (3) umfassendes spurgebundenes Fahrzeug (1) erstreckt.

3. Verfahren nach Anspruch 1 oder 2,
wobei die Daten zwischen
- der ersten (2) oder zweiten Fahrzeugeinheit (3) und
- der landseitigen Dateneinrichtung (20) drahtlos übertragen werden.

4. Verfahren nach Anspruch 3,
wobei die drahtlos übertragenen Daten unter Anwendung eines Mobilfunkstandards übertragen werden.

5. Verfahren nach wenigstens einem der vorhergehenden Ansprüche,
wobei die Daten zwischen
- der ersten (2) oder zweiten Fahrzeugeinheit (3) und
- der landseitigen Dateneinrichtung (20)
verschlüsselt übertragen werden.

6. Verfahren nach wenigstens einem der vorhergehenden Ansprüche,
wobei
eine Anfrage nach Daten ausgehend von dem zweiten Kommunikationsnetz (12) an die landseitige Dateneinrichtung (20) gesendet wird (G),
die Anfrage ausgehend von der landseitigen Dateneinrichtung (20) an das erste Kommunikationsnetz (12) gesendet wird (H) und
die angefragten Daten von dem ersten Kommunikationsnetz (12) auf die Anfrage hin bereitstellt werden (J).

7. Verfahren nach wenigstens einem der vorhergehenden Ansprüche,
wobei
- die erste (102) und zweite Fahrzeugeinheit (103) Teil einer spurgebundenen Fahrzeugflotte (101) sind und/oder
- die erste (2) und zweite Fahrzeugeinheit (3) Teil eines gemeinsamen spurgebundenen Fahrzeugs (1) sind.

8. Verfahren nach wenigstens einem der vorhergehenden Ansprüche,
wobei Daten, die für eine Übertragung zwischen einem ersten Steuernetz (112) als erstes Kommunikationsnetz (12) und einem zweiten Steuernetz (113) als zweites Kommunikationsnetz (13) vorgesehen sind, priorisiert zwischen
- der ersten Fahrzeugeinheit (2) und der landseitigen Dateneinrichtung (20) oder
- der zweite Fahrzeugeinheit (3) und der landseitigen Dateneinrichtung (20)
übertragen werden.

9. Vorrichtung zum Übertragen von Daten zwischen einem ersten Kommunikationsnetz (12) einer ersten spurgebundenen Fahrzeugeinheit (2) und einem zweiten Kommunikationsnetz (13) einer zweiten spurgebundenen Fahrzeugeinheit (3),
wobei
das erste Kommunikationsnetz (12) ein untergeordnetes Teilnetz (14) der ersten Fahrzeugeinheit (2) bildet und das zweite Kommunikationsnetz (13) ein untergeordnetes Teilnetz (15) der zweiten Fahrzeugeinheit (3) bildet,
die Teilnetze (14, 15) sich über einen jeweiligen Teilbereich der Fahrzeugeinheit (2, 3) erstrecken und jeweils über eine Adressumsetzungseinrichtung in Form eines Network-Address-Translation-Routers mit einem übergeordneten Kommunikationsnetz (30) gekoppelt sind und die Vorrichtung ausgebildet ist, die Daten zwischen der ersten (2) und zweiten Fahrzeugeinheit (3) über eine landseitige Dateneinrichtung (20) zu übertragen
wobei ein übergeordnetes Kommunikationsnetz (30) ausgebildet ist, die Daten zwischen dem ersten (2) und zweiten Kommunikationsnetz (3) zu übertragen.

10. Vorrichtung nach Anspruch 9,
wobei
- sich das erste Kommunikationsnetz (12) über die erste Fahrzeugeinheit (2) erstreckt,
- sich das zweite Kommunikationsnetz (13) über die zweite Fahrzeugeinheit (3) erstreckt und/oder
- sich das übergeordnete Kommunikationsnetz (30) über ein spurgebundenes Fahrzeug (1), welches die erste (2) und zweite Fahrzeugeinheit (3) umfasst, erstreckt.

11. Kommunikationsnetz zum Übertragen von Daten zwischen einem ersten Kommunikationsnetz (12) einer ersten spurgebundenen Fahrzeugeinheit (2) und einem zweiten Kommunikationsnetz (13) einer zweiten spurgebundenen Fahrzeugeinheit (3) umfassend:
- eine landseitige Dateneinrichtung (20),
- eine erste datentechnische Verbindung (24) zwischen der ersten Fahrzeugeinheit (2) und der landseitigen Dateneinrichtung (20) und
- eine zweite datentechnische Verbindung (25) zwischen der zweiten Fahrzeugeinheit (3) und der landseitigen Dateneinrichtung (20),
wobei das Kommunikationsnetz als übergeordnetes Kommunikationsnetz (30) zum Übertragen von Daten zwischen dem erste Kommunikationsnetz (12) und dem zweiten Kommunikationsnetz (13) mittels des übergeordneten Kommunikationsnetzes (30) auf einem Weg über die erste datentechnische Verbindung (24), die landseitige Dateneinrichtung (20) und die zweite datentechnische Verbindung (25) ausgebildet ist und
wobei das erste Kommunikationsnetz (12) ein untergeordnetes Teilnetz (14) der ersten Fahrzeugeinheit (2) bildet und das zweite Kommunikationsnetz (13) ein untergeordnetes Teilnetz (15) der zweiten Fahrzeugeinheit (3) bildet,
die Teilnetzte sich über einen jeweiligen Teilbereich der Fahrzeugeinheit (2, 3) erstrecken und jeweils über eine Adressumsetzungseinrichtung in Form eines Network-Address-Translation-Routers mit dem übergeordneten Kommunikationsnetz (30) gekoppelt sind.

12. Verwendung einer datentechnischen Verbindung (24; 25), welche zur Übertragung von Daten zwischen einer ersten (2) und/oder zweiten Fahrzeugeinheit (3) und einer landseitigen Dateneinrichtung (20) ausgebildet ist, zum Übertragen von Daten zwischen einem ersten Kommunikationsnetz (12) einer ersten spurgebundenen Fahrzeugeinheit (2) und einem zweiten Kommunikationsnetz (13) einer zweiten spurgebundenen Fahrzeugeinheit (3) über die landseitige Dateneinrichtung (20) mittels eines übergeordneten Kommunikationsnetzes (30),
wobei das erste Kommunikationsnetz (12) ein untergeordnetes Teilnetz (14) der ersten Fahrzeugeinheit (2) bildet und das zweite Kommunikationsnetz (13) ein untergeordnetes Teilnetz (15) der zweiten Fahrzeugeinheit (3) bildet,
die Teilnetze sich über einen jeweiligen Teilbereich der Fahrzeugeinheit (2, 3) erstrecken und jeweils über eine Adressumsetzungseinrichtung in Form eines Network-Address-Translation-Routers mit dem übergeordneten Kommunikationsnetz (30) gekoppelt sind.

## Claims

1. Method for transmitting data between a first communications network (12) of a first rail-bound vehicle unit (2) and a second communications network of a second rail-bound vehicle unit (3), wherein
the first communications network (12) forms a subordinate part network (14) of the first vehicle unit (2) and the second communications network (13) forms a subordinate part network (15) of the second vehicle unit (3),
the part networks (14, 15) extend over a respective part region of the vehicle unit (2, 3) and in each case are coupled via an address translation facility in the form of a Network Address Translation router to a superordinate communications network (30) and the data is transmitted between the first vehicle unit (2) and second vehicle unit (3) via a land-based data facility (20) by means of the superordinate communications network (30).

2. Method according to claim 1, wherein
- the first communications network (12) extends over the first vehicle unit (2),
- the second communications network (13) extends over the second vehicle unit (3) and/or
- the superordinate communications network (30) extends over a rail-bound vehicle (1) that comprises the first vehicle unit (2) and second vehicle unit (3).

3. Method according to claim 1 or 2, wherein
the data is transmitted in a wireless manner between
- the first vehicle unit (2) or second vehicle unit (3) and
- the land-based data facility (20).

4. Method according to claim 3, wherein
the data that is transmitted in a wireless manner is transmitted using a mobile radio standard.

5. Method according to at least one of the preceding claims, wherein
the data is transmitted in an encrypted manner between
- the first vehicle unit (2) or second vehicle unit (3) and
- the land-based data facility (20).

6. Method according to at least one of the preceding claims, wherein
a request for data is sent (G) originating from the second communications network (12) to the land-based data facility (20),
the request is sent (H) originating from the land-based data facility (20) to the first communications network (12)
and
the requested data is provided (J) by the first communications network (12) in response to the request.

7. Method according to at least one of the preceding claims, wherein
- the first vehicle unit (102) and second vehicle unit (103) are part of a fleet of rail-bound vehicles (101) and/or
- the first vehicle unit (2) and second vehicle unit (3) are part of a common rail-bound vehicle (1).

8. Method according to at least one of the preceding claims, wherein
data that is provided for a transmission between a first control network (112) as the first communications network (12) and a second control network (113) as the second communications network (13) are transmitted in a prioritised manner between
- the first vehicle unit (2) and the land-based data facility (20) or
- the second vehicle unit (3) and the land-based data facility (20).

9. Apparatus for transmitting data between a first communications network (12) of a first rail-bound vehicle unit (2) and a second communications network (13) of a second rail-bound vehicle unit (3), wherein
the first communications network (12) forms a subordinate part network (14) of the first vehicle unit (2) and the second communications network (13) forms a subordinate part network (15) of the second vehicle unit (3),
the part networks (14, 15) extend over a respective part region of the vehicle unit (2, 3) and in each case are coupled via an address translation facility in the form of a Network Address Translation router to a superordinate communications network (30) and the apparatus is embodied so as to transmit the data between the first vehicle unit (2) and second vehicle unit (3) via a land-based data facility (20),
wherein a superordinate communications network (30) is embodied so as to transmit the data between the first communications network (2) and second communications network (3) .

10. Apparatus according to claim 9, wherein
- the first communications network (12) extends over the first vehicle unit (2),
- the second communications network (13) extends over the second vehicle unit (3) and/or
- the superordinate communications network (30) extends over a rail-bound vehicle (1) that comprises the first vehicle unit (2) and second vehicle unit (3).

11. Communications network for transmitting data between a first communications network (12) of a first rail-bound vehicle unit (2) and a second communications network (13) of a second rail-bound vehicle unit (3) comprising:
- a land-based data facility (20),
- a first data-technology connection (24) between the first vehicle unit (2) and the land-based data facility (20) and
- a second data-technology connection (25) between the second vehicle unit (3) and the land-based data facility (20),
wherein the communications network is embodied as a superordinate communications network (30) for transmitting data between the first communications network (12) and the second communications network (13) by means of the superordinate communications network (30) on a path via the first data-technology connection (24), the land-based data facility (20) and the second data-technology connection (25) and
wherein the first communications network (12) forms a subordinate part network (14) of the first vehicle unit (2) and the second communications network (13) forms a subordinate part network (15) of the second vehicle unit (3),
the part networks (14, 15) extend over a respective part region of the vehicle unit (2, 3) and in each case are coupled via an address translation facility in the form of a Network Address Translation router to a superordinate communications network (30).

12. Use of a data-technology connection (24; 25), that is embodied so as to transmit data between a first vehicle unit (2) and/or second vehicle unit (3) and a land-based data facility (20) so as to transmit data between a first communications network (12) of a first rail-bound vehicle unit (2) and a second communications network (13) of a second rail-bound vehicle unit (3) via the land-based data facility (20) by means of a superordinate communications network (30), wherein the first communications network (12) forms a subordinate part network (14) of the first vehicle unit (2) and the second communications network (13) forms a subordinate part network (15) of the second vehicle unit (3),
the part networks (14, 15) extend over a respective part region of the vehicle unit (2, 3) and in each case are coupled via an address translation facility in the form of a Network Address Translation router to a superordinate communications network (30).

## Revendications

1. Procédé de transmission de données entre un premier réseau (12) de communication d'une première unité (2) de véhicule guidée sur rail et un deuxième réseau de communication d'une deuxième unité (3) de véhicule guidée sur rail,
dans lequel
le premier réseau (12) de communication forme un réseau (14) partiel subordonné de la première unité (2) de véhicule et le deuxième réseau (13) de communication forme un réseau (15) partiel subordonné de la deuxième unité (3) de véhicule,
les réseaux (14, 15) partiels s'étendent sur une zone partielle respective de l'unité (2, 3) de véhicule et sont couplés respectivement par un dispositif de changement d'adresse sous la forme d'un network-address-translation-router à un réseau (30) de communication supérieur hiérarchiquement et on transmet les données entre la première (2) et la deuxième unité (3) de véhicule par un dispositif (20) de données sur terre au moyen du réseau (30) de communication supérieur hiérarchiquement.

2. Procédé suivant la revendication 1,
dans lequel
- le premier réseau (12) de communication s'étend sur la première unité (2) de véhicule,
- le deuxième réseau (13) de communication s'étend sur la deuxième unité (3) de véhicule et/ou
- le réseau (30) de communication supérieur hiérarchiquement s'étend sur un véhicule (1) guidé sur rail comprenant la première (2) et la deuxième unité (3) de véhicule.

3. Procédé suivant la revendication 1 ou 2,
dans lequel
on transmet sans fil les données entre
- la première unité (2) ou la deuxième unité (3) de véhicule et
- le dispositif (20) de données sur terre.

4. Procédé suivant la revendication 3,
dans lequel
on transmet les données transmises sans fil en appliquant une norme de téléphonie mobile.

5. Procédé suivant au moins l'une des revendications précédentes,
dans lequel
on transmet de manière chiffrée les données entre
- la première unité (2) ou la deuxième unité (3) de véhicule et
- le dispositif (20) de données sur terre.

6. Procédé suivant au moins l'une des revendications précédentes,
dans lequel
on envoie (G) une demande de données du deuxième réseau (12) de communication au dispositif (20) de données sur terre,
on envoie (H) la demande du dispositif (20) de données sur terre au premier réseau (12) de communication, et
on met (J) sur demande les données demandées à disposition par le premier réseau (12) de communication.

7. Procédé suivant au moins l'une des revendications précédentes,
dans lequel
- la première (102) et la deuxième unités (103) de véhicule font partie d'une flotte (101) de véhicules guidés sur rail, et/ou
- la première (2) et la deuxième unités (3) de véhicule font partie d'un véhicule (1) commun guidé sur rail.

8. Procédé suivant au moins l'une des revendications précédentes,
dans lequel
on transmet des données, qui sont prévues pour une transmission entre un premier réseau (112) de commande comme premier réseau (12) de communication et un deuxième réseau (113) de commande comme réseau (13) de communication, de manière prioritaire entre
- la première unité (2) de véhicule et le dispositif (20) de données sur terre, ou
- la deuxième unité (3) de véhicule et le dispositif (20) de données sur terre.

9. Dispositif de transmission de données entre un premier réseau (12) de communication d'une première unité (2) de véhicule guidée sur rail et un deuxième réseau (13) de communication d'une deuxième unité (3) de véhicule guidée sur rail,
dans lequel
le premier réseau (12) de communication forme un réseau (14) partiel subordonné de la première unité (2) de véhicule et le deuxième réseau (13) de communication forme un réseau (15) partiel subordonné de la deuxième unité (3) de véhicule,
les réseaux (14, 15) partiels s'étendent sur une zone partielle respective de l'unité (2, 3) de véhicule et sont couplés respectivement par un dispositif de changement d'adresse sous la forme d'un network-address-translation-router à un réseau (30) de communication supérieur hiérarchiquement et le dispositif est constitué pour transmettre les données entre la première (2) et la deuxième unité (3) de véhicule par un dispositif (20) de données sur terre,
dans lequel il est constitué un réseau (30) de communication supérieur hiérarchiquement pour transmettre des données entre le premier (2) et le deuxième réseau (3) de communication.

10. Dispositif suivant la revendication 9,
dans lequel
- le premier réseau (12) de communication s'étend sur la première unité (2) de véhicule,
- le deuxième réseau (13) de communication s'étend sur la deuxième unité (3) de véhicule, et/ou
- le réseau (30) de communication supérieur hiérarchiquement s'étend sur un véhicule (1) guidé sur rail, qui comprend la première (2) et la deuxième unités (3) de véhicule.

11. Réseau de communication pour la transmission de données entre un premier réseau (12) de communication d'une première unité (2) de véhicule guidée sur rail et un deuxième réseau (13) de communication d'une deuxième unité (3) de véhicule guidée sur rail, comprenant :
- un dispositif (20) de données sur terre,
- une première liaison (24) en technique de données entre la première unité (2) de véhicule et le dispositif (20) de données sur terre, et
- une deuxième liaison (25) en technique de données entre la deuxième unité (3) de véhicule et le dispositif (20) de données sur terre,
dans lequel le réseau de communication est constitué en réseau (30) de communication supérieur hiérarchiquement pour la transmission de données entre le premier réseau (12) de communication et le deuxième réseau (13) de communication, au moyen du réseau (30) de communication supérieur hiérarchiquement sur un chemin passant par la première liaison (24) en technique de données, le dispositif (20) de données sur terre et la deuxième liaison (25) en technique de données, et
dans lequel le premier réseau (12) de communication forme un réseau (14) partiel subordonné de la première unité (2) de véhicule et le deuxième réseau (13) de communication forme un réseau (15) partiel subordonné de la deuxième unité (3) de véhicule,
les réseaux partiels s'étendent sur une zone partielle respective de l'unité (2, 3) de véhicule et sont couplés respectivement par un dispositif de changement d'adresse sous la forme d'un network-address-translation-router au réseau (30) de communication supérieur hiérarchiquement.

12. Utilisation d'une liaison (24 ; 25) en technique de données, qui est constituée pour la transmission de données entre une première (2) et/ou une deuxième unité (3) de véhicule et un dispositif (20) de données sur terre pour la transmission de données entre un premier réseau (12) de communication d'une première unité (2) de véhicule guidée sur rail et un deuxième réseau (13) de communication d'une deuxième unité (3) de véhicule guidée sur rail par le dispositif (20) de données sur terre au moyen d'un réseau (30) de communication supérieur hiérarchiquement,
dans lequel le premier réseau (12) de communication forme un réseau (14) partiel subordonné de la première unité (2) de véhicule et le deuxième réseau (13) de communication forme un réseau (15) partiel subordonné de la deuxième unité (3) de véhicule,
les réseaux partiels s'étendent sur une zone partielle respective de l'unité (2, 3) de véhicule et sont couplés respectivement par un dispositif de changement d'adresse sous la forme d'un network-address-translation-router au réseau (30) de communication supérieur hiérarchiquement.
